# EUROPEAN PATENT SPECIFICATION

(11) **EP 3 947 609 B1**
(45) Date of publication and mention of the grant of the patent: **07.06.2023**
(21) Application number: 19714545.1
(22) Date of filing: 25.03.2019
(51) Int. Cl.: C10L 5/36, C10L 5/02, C10L 5/44, C10L 9/12, C10L 11/04, C10L 11/06, A23L 27/00

(54) **A COMBUSTIBLE BRIQUETTE AND A METHOD FOR MANUFACTURING A COMBUSTIBLE BRIQUETTE**
BRENNBARES BRIKETT UND VERFAHREN ZUR HERSTELLUNG EINES BRENNBAREN BRIKETTS
BRIQUETTE COMBUSTIBLE ET PROCÉDÉ DE FABRICATION D'UNE BRIQUETTE COMBUSTIBLE

(43) Date of publication of application: 09.02.2022
(73) Proprietor: Novo Futura ApS, 3060 Espergærde (DK)
(72) Inventor: BRØGGER, Carsten Nygaard, 3060 Espergærde (DK)
(74) Representative: Patentgruppen A/S
(86) International application number: PCT/DK2019/050101
(87) International publication number: WO 2020/192850

(56) References cited:
- WO-A1-95/03705
- US-A- 3 402 032
- US-A- 5 762 656

## Description

### Field of the invention

The invention relates to a combustible briquette comprising more than one lumps primarily made of a combustible material. The invention also relates to a method for manufacturing a combustible briquette and use of a combustible briquette.

### Background of the invention

Charcoal briquettes have the advantage of being energy dense and they burn in a very controlled manner for a relatively long time. And since charcoal briquettes produce very little smoke such briquettes are a very popular fuel in barbecue grills when grilling or barbecuing food. However, because such briquettes are so uniform and dense it can be difficult to ignite them.

Thus, from the British patent application GB 2 306 502 A it is known to form a briquette with two layers in the form of an upper combustible layer and a lower ignition layer. The lower ignition layer comprises an oxidizing material that will enable easy and fast ignition of the ignition layer which in turn will ignite the combustible layer. But a layered briquette requires to be orientated in a certain way to work optimally and from American patent US 3,527,580 it is therefore known to coat the entire charcoal briquettes with paper pulp and oxidant mixture to enable quick and easy ignition. However, such a coating will burn quickly, and it will take a relatively long time before charcoal briquettes has reached a temperature suitable for grilling.

US 5 762 656 A discloses charcoal briquette or other solid fuel composition in briquette form exhibiting improved ignition and burn phase characteristics, especially for use in barbecue cooking, that includes a first region comprising a densified coal portion having a first material distribution and a first density and a second region comprising a wood char portion having a second material distribution and a second density within which the coal portion is distributed, wherein the first density is greater than the second density, and the coal portion and the wood char portion together constitute the total composition of the briquette which is unchanged from a briquette of similar composition having no regions of different densities or material distribution.

An object of the present invention is therefore to provide for a combustible briquette technique relieving the above-mentioned drawbacks.

### The invention

The invention provides for a combustible briquette comprising more than one lumps primarily made of a combustible material, wherein the more than one lumps have an extent of minimum 4 mm. The more than one lumps are embedded in an embedding material and the embedding material comprises charcoal and an ignition agent.

Ordinary charcoal briquettes are relatively inexpensive but difficult to ignite and it takes quite a while before a pile of ignited briquettes reach a temperature suitable for grilling. Adding an ignition agent to the briquette would solve this problem in that the time from initial ignition to when the briquettes are hot enough to use for grilling is severely reduced when the charcoal is mixed with an ignition agent - but there are drawbacks to all kind of ignition agent. First of all the ignition agent is costlier than charcoal so the more ignition agent that is used in the briquette, the more expensive the briquette becomes. Secondly, depending on the type of ignition agent, the ignition agent could produce a little more smoke than charcoal. Thus, by embedding lumps of cheap combustible material inside an embedding material comprising charcoal and an ignition agent it is ensured that the cost of the briquette is reduced, and it is at the same time ensured that the briquette is easily ignited and will reach a temperature suited for grilling food very quickly - and maintain the desired temperature throughout the combustion of the entire briquette.

Furthermore, by forming the combustible material - such as biomass - as more than one lumps and embedding these lumps inside the embedding material it is ensured that the contact surface between the embedding material and the lumps is as big as possible to ensure a smooth and controlled ignition of the lumps and embedding the lumps in the embedding material is also advantageous in that hereby a more uniform combustion is ensured which is not dependent on the initial orientation of the briquette. If the combustible material was powder of small fragments distributed throughout the embedding material it would counter the effect of the ignition agent and thereby the amount of ignition agent would have to be increased making the briquette mere expensive. Thus, it is advantageous to incorporate the cheaper combustible material in the form of discrete lumps in the embedding material. Furthermore, if the lumps are too small it becomes too expensive and difficult to form them and distribute them sufficiently evenly in the embedding material and it is therefore advantageous that the lumps have a extent of minimum 4 mm - i.e. that the maximum physical extent of the lumps is at least 4 mm - also to ensure that the effect of the ignition agent is not affected.

It should be emphasised that the term "combustible material" in this context should be understood as any substance that can be burned to provide heat such as any kind of material containing or based on wood, straw material, nut shells, manure or other.

It should further be emphasised that the term "embedding material" in this context should be interpreted as an embedding material in relation to the lumps. I.e. the lumps are embedded in the embedding material and not just encapsulated by an outer coating of said material.

It should also be emphasised that the term "ignition agent" in this context should be interpreted as any kind of oxidizer or flammable material that can aid in and speed up the ignition of combustible briquette - such as any kind of particles, oil or wax that are more flammable and/or easier to ignite than the charcoal such as paraffin, bioethanol, solidified ethanol or other or any kind of oxidising agent.

In this context it should also be understood that charcoal is the lightweight black carbon and possibly ash residue hydrocarbon produced by removing water and other volatile constituents from animal and vegetation substances. Charcoal is usually produced by slow pyrolysis - the heating of wood or other substances in the absence of oxygen. This process is called charcoal burning. The finished charcoal consists largely of carbon. The advantage of charcoal in relation to e.g. wood is that the removal of the water and other components allows charcoal to burn to a higher temperature and give off very little smoke whereas regular wood gives off a good amount of steam, organic volatiles, and unburnt carbon particles - soot - in its smoke.

Furthermore, it should be emphasised that the term "briquette" (or briquet) in this context should be understood as a compressed block of coal dust or other combustible biomass material such as charcoal, sawdust, wood chips, peat, or other materials suitable for fuel in a grill or barbeque for heating human food.

In an aspect of the invention, the combustible material comprises substantially raw biomass.

As previously mentioned, the ignition agent is costlier than charcoal so by adding any amount of ignition agent to the briquette the price of the briquette is increased. However, raw biomass such as wood is cheaper than charcoal so by making the lumps comprise at least some raw biomass the total price of the briquette can be the same or at least closer to the price or an ordinary charcoal briquette. Furthermore, the biomass will give of more smoke than charcoal which can be advantageous in that the biomass hereby can induce a smoking effect and/or flavour on the food being grilled.

It should be emphasised that the term "raw biomass" in this context should be interpreted as any kind of raw plant or animal material forming an energy source - such as any kind of material made from raw wood, straw, peat, manure or other. The term "raw" refers to the material not having undergone any substantially energy consuming processing - except e.g. having been dried, compressed or similar. Burning biomass releases carbon emissions but has been classed as a renewable energy source in the EU and UN legal frameworks, because plant stocks can be replaced with new growth.

In an aspect of the invention, the biomass comprises plant material such as wood.

Plant material such as wood, straw, peat, fruit stone or shell material is flammable and relatively inexpensive and therefore particularly suited as combustion material in relation to grilling human food.

In an aspect of the invention, the plant material comprises herbs.

Making the plant material comprises herbs is advantageous in that the herbs will produce flavoured smoke that will flavour the food being grilled advantageously.

In an aspect of the invention, the more than one lumps are formed by a number of subcomponents that are joined to form the one or more lumps.

Forming the lumps of subcomponents such as shavings, chips, flakes, granulate, powder or other or any combination thereof is advantageous in that the lumps hereby can be formed by cheap waste material from other processes and the lumps can easily be given a desired shape.

In this context the term "joined" is to be understood as combined, merged, connected, united or other e.g. through adding a binder, compressing, casting or other.

In an aspect of the invention, the subcomponents are joined through compression. Forming the lumps by compressing the subcomponents is advantageous in that it makes the subcomponents more energy dense and in that it is a simple and efficient way of joining subcomponents to form lumps of a desired size and shape.

In an aspect of the invention, the more than one lumps have an extent of minimum 5 mm, preferably minimum 7 mm and most preferred minimum 10 mm.

If the lumps are too small, it becomes too expensive and difficult to form them and distribute them sufficiently evenly in the embedding material and it is therefore advantageous that the lumps have a minimum extent of a certain magnitude. Thus, the mentioned minimum threshold presents an advantageous threshold regarding cost and efficiency.

In an aspect of the invention, the more than one lumps have an extent of maximum 95%, preferably maximum 80% and most preferred maximum 60% of the maximum extent of the combustible briquette.

If the lumps become too big in relation to the maximum size of the briquette the risk of the embedding material not igniting the lumps properly before being fully combusted is increased. Thus, the present maximum sizes of the lumps present advantageous thresholds regarding ensuring a smooth, uniform and constant combustion of the entire briquette.

In an aspect of the invention, the combustible material comprises biomass and another combustible material having a calorific value higher than the biomass.

Mixing the biomass and another combustible material having a calorific value higher than the biomass - such as charcoal - is advantageous in that the combustion temperature is increased and a combustion more similar to a traditional charcoal briquette is obtained.

In an aspect of the invention, at least some of the biomass is arranged as one or more discrete items embedded in the combustible material having a calorific value higher than the biomass.

Forming the biomass as pellets or clots embedded in e.g. charcoal is advantageous in that the biomass hereby can be incorporated in compressed form ensuring a more energy dense briquette.

The ignition agent constitutes between 8 and 45% of the weight of the embedding material.

If the embedding material contains too much of the ignition agent, the briquette becomes too expensive and the embedding material will burn too quickly and if the embedding material contains too little of the ignition agent, the briquette becomes difficult to ignite and it will take too long for the briquette to reach a sufficient temperature suited for grilling food. Thus, the present ignition agent amount ranges present an advantageous relationship between price and functionality.

In an aspect of the invention, the ignition agent is an oxidizing agent.

An oxidizing agent will provide a controlled amount of oxygen to the combustion process and ensure fast and controlled ignition of the briquette. Furthermore, since the briquette then contains its own oxygen source the briquette will burn in a more uniform and predictable manner - even under more versatile and challenging circumstances. In this context the term oxidizing agent should be understood as any kind of substance that has the ability to oxidize other substances - in other words to cause them to lose electrons. The oxidizing agent is a chemical species that transfers electronegative atoms, usually oxygen, to a substrate. Oxidizing agents are also often referred to as an oxidant or an oxidizer. Common oxidizing agents may comprise inorganic nitrates, particularly inorganic nitrates of metals, nitrites, chlorates, perchlorates, permanganates, manganates, perbromates, chromates, dichromates and peroxides as well as any organic oxidizer, for example nitrocellulose.

In an aspect of the invention, the oxidizing agent comprises sodium nitrate, potassium nitrate and/or sodium chlorate.

Sodium nitrate, potassium nitrate and/or sodium chlorate are particularly suited as oxidizing agents in relation to combustible briquette used for grilling human food in that the combustion or decomposition of these oxidizing agent does not - or only to a relatively little degree - produce toxic substances, unpleasant smoke or other that could adversely affect the quality of the food being cooked by means of the combustible briquettes.

In an aspect of the invention, the more than one lumps constitute at least 20%, preferably at least 40% and most preferred at least 60% of the total weight of the briquette.

As previously mentioned, the ignition agent is costly and to ensure that the total price of the briquette is reduced to level at which it can compete with conventional charcoal briquettes - and also just to reduce the cost of the briquette according to the present invention - it is advantageous that the content of the lumps is at least according to these thresholds. I.e. if the lumps constitute too little of the total weight of the briquette the briquette becomes too expensive (in that the ignition agent is expensive) and if the lumps constitute too much of the total weight of the briquette the risk of embedding material not igniting the lumps is increased. Thus, the present amount ranges present an advantageous relationship between cost and functionality.

In an aspect of the invention, the embedding material is fully encapsulating the one or more lumps.

It is advantageous that the embedding material fully encloses the lumps in that the briquette hereby will burn more uniformly no matter how the briquette is orientated.

In an aspect of the invention, the embedding material constitutes at least 10%, preferably at least 20% and most preferred at least 25 % of the total weight of the briquette.

If the embedding material constitutes too much of the total weight of the briquette the briquette becomes too expensive and if the embedding material constitutes too little of the total weight of the briquette the risk of the embedding material not igniting the lumps is increased. Thus, the present amount thresholds present an advantageous relationship between cost and functionality.

Furthermore, to ensure that the briquette is quickly hot enough for use, it is advantageous that the embedding material - comprising the ignition agent - constitutes a large part by weight of the total briquette weight and that it contains charcoal, in that if there is too little of the embedding material it is quickly combusted too quickly, it can only be used for igniting the lumps and then it takes quite a while before the lumps reaches a sufficient temperature - which is one of the problems with the prior art techniques (like lighter fluid) for lighting charcoal briquettes and one of the problems with the briquette disclosed in US 3,527,580. By making the embedding material constitute at least 10%, the briquette will quickly reach a sufficient grilling temperature, and then when combustion reaches the lumps, the lumps will be preheated and the combustion transition between the embedding material and the lumps will happen substantially smooth and unnoticeable.

In an aspect of the invention, the thickness of the embedding material is substantially constant.

Forming the embedding material with a substantial constant thickness is advantageous in that the combustion of the combustible briquette is more predictable both regarding speed and intensity and in that the combustion is more uniform no matter how the combustible briquette is orientated.

In an aspect of the invention, the combustible briquette comprises one or more through holes extending all the way through the combustible briquette.

Forming the briquette with one or more through holes is advantageous in that these will aid in suppling air to the lumps and thereby ensure a more reliable combustion. In an aspect of the invention, the combustible briquette is substantially spherical. Forming the briquette substantially spherical is advantageous in that the briquette will burn more uniformly no matter how the briquette is orientated.

The combustible material comprises compressed charcoal.

Charcoal if relatively inexpensive and since it burns to a high temperature and give off very little smoke it is particularly suited for use in the lumps of a briquette for grilling food.

Compressing the combustible material is advantageous in that it makes the combustible material more energy dense whereby the volume of the briquette can be reduced.

In an aspect of the invention, the more than one lumps also comprises an ignition agent and wherein the relative content of ignition agent by weight in the one or more lumps is lower than the relative content of ignition agent by weight in the embedding material The ignition agent is more expensive than the other material forming the briquette but a sufficient amount of the ignition agent in the embedding material is important to ensure quick and easy ignition and that a sufficient temperature is reached quickly, and it is therefore advantage that the embedding material contains a higher percentage of ignition agent than the lumps.

In an aspect of the invention, the lumps do not contain an ignition agent.

The ignition agent is relatively expensive, and it is therefore advantageous to form the lumps without any ignition agent.

In an aspect of the invention, the embedding material has a higher relative content by weight of charcoal than the lumps.

Charcoal is more expensive and burns more controlled than e.g. biomass and it is therefore advantageous to have a higher content of charcoal in the embedding material than in the lumps.

In an aspect of the invention, the embedding material and/or the lumps is at least partially held together by a binder.

Holding the embedding material and/or the lumps together by means of a binder is advantageous in that a more coherent briquette can be formed and in that the addition of a binder is a simple and inexpensive way of joining substances that not otherwise would be particularly coherent - even if they are pressed together.

In this context the term "binder" should comprise any kind of substance capable of increasing the coherency of the briquette such as any kind of starch, lime (e.g. with molasses), lignosulphanates, silicates, cement, inorganic salts and others.

In an aspect of the invention, the extent of the more than one lumps is the maximum extent of the lumps.

Hereby is achieved an advantageous embodiment of the invention.

In an aspect of the invention, at least one of the more than one lumps is located in the core of the embedding material to form a core lump.

Arranging one of the more than one lump so that it forms the core of the briquette is advantageous in that it is ensured that the lump is fully encapsulated by the embedding material and in that it will ensure an efficient combustion transition between the embedding material and the core lump.

In an aspect of the invention, the core lump constitutes at least 20%, preferably at least 35% and most preferred at least 50% of the total weight of the briquette.

Forming the briquette with a large core lump is advantageous in that a large core lump is easier to handle and in that it will reduce the total cost of the briquette.

In an aspect of the invention, the core lump constitutes at no more than 95%, preferably no more than 80% and most preferred at least 70% of the total weight of the briquette. If the core lump becomes too big the risk of the core lump not reaching a sufficient temperature to ignite when the embedding material is fully combusted is increased and the present core lump sizes therefore presents advantageous thresholds regarding function.

In an aspect of the invention, the more than one lumps are formed spherically.

Forming the lumps with a general spherically shape is advantageous in that they are compact and in that they will burn uniformly no matter the orientation of the briquette. The invention also provides for a method for manufacturing a combustible briquette. The method comprises the steps of:
- forming more than one lumps having a minimum extent of at least 4 mm by joining one or more subcomponents primarily made of a combustible material, and
- embedding the more than one lumps in an embedding material comprising charcoal and an ignition agent.

Forming the briquette by first forming the lumps by joining subcomponents and then embedding the lumps in an embedding material is advantageous in that the lumps and the embedding material hereby can be formed by two different processes or similar processed with different settings so that the processes can be more suited for the specific composition of the lumps and the embedding material respectively. Furthermore, by forming the lumps at least 4 mm big it is ensured that they easily can be handled and that they better can be distributed more evenly in the embedding material.

In an aspect of the invention, the subcomponents are joined by compression to form the more than one lumps.

Forming the lumps by compressing the subcomponents is advantageous in that it makes the subcomponents more energy dense and in that it is a simple and efficient way of joining subcomponents to form lumps of a desired size and shape.

In an aspect of the invention, the more than one lumps are embedded in the embedding material by being mixed into embedding material.

Forming the lumps and then mixing them into a liquid, semi-liquid, granular or powder solution of the embedding material is a simple and efficient way of embedding the lumps in the embedding material and ensuring that the lumps are more efficiently distributed.

In an aspect of the invention, the embedding material is in a liquid or semiliquid state when the one or more lumps are embedded in the embedding material.

Embedding the lumps by mixing them into a liquid or semiliquid solution of the embedding material is a simple and efficient way of embedding the lumps in the embedding material and ensuring that the lumps are more efficiently distributed.

In an aspect of the invention, the combustible briquette is formed by shaping and drying the embedding material containing the one or more lumps.

Simply drying the liquid or semiliquid solution of the embedding material containing the lumps is a simple an efficient way of forming a solid briquette with lumps embedded in the embedding material.

In an aspect of the invention, the combustible briquette is formed by compressing the embedding material containing the more than one lumps.

Forming the briquette by pressing the embedding material containing the lumps is advantageous in the pressing is a simple and inexpensive production method what will both apply the embedding material and compress it and the lumps to ensure an energy dense briquette.

In an aspect of the invention, the more than one lumps are each formed by compressing the subcomponents at a first pressure and wherein the combustible briquette is formed by pressing the embedding material containing the more than one lumps at a second pressure and wherein the second pressure is higher than the first pressure.

If the lumps were pressed at a relatively low pressure and subsequently the embedding material containing the lumps was pressed at a higher pressure a more uniform density of the entire briquette is ensured and a better adhesion of the embedding material to the lumps can be formed when compressed simultaneously.

In an aspect of the invention, the combustible briquette is formed through a casting process.

Casting - such as wet casting - the embedding material with the lumps is a simple and inexpensive way of ensuring good adhesion of the embedding material to the lumps.

In an aspect of the invention, the embedding material is applied to the more than one lumps by dipping the one or more lumps one or more times into a solution comprising the embedding material, after which the solution sticking to the lumps is cured and/or dried to form at least part of the embedding material.

Applying the embedding material to the lumps by dipping is a simple and inexpensive way of ensuring good adhesion of the embedding material to the lumps.

In an aspect of the invention, the method further comprises the step of encapsulating the embedding material containing the more than one lumps in an outer layer.

Providing the briquette with an additional outer layer or coating is advantageous in that this layer can provide additional functionality - such as a vax layer preventing dust formation, a layer that will visually indicate that the briquette is ignited (the embedding layer will typically not produce visible flames during combustion), a binder layer that will aid in maintaining the briquette whole until use, an oil layer to protect the briquette against ingress of moist or water or other.

In an aspect of the invention, the outer layer comprises an ignition agent.

Forming the outer layer with an ignition agent is advantageous in that it will enable a faster and more uniform ignition of the briquette.

In an aspect of the invention, the outer layer is formed by the same material as the embedding material.

Forming the outer layer as a layer of embedding material - but without the lumps - is advantageous in that a more uniform ignition is ensured no matter how the briquette is orientated, and it is ensured that all lumps are fully encapsulated in embedding material.

In an aspect of the invention, the method is a method for manufacturing a combustible briquette according to any of the previously discussed combustible briquettes.

Furthermore, the invention relates to use of a combustible briquette according to any of the previously discussed combustible briquettes for grilling human food.

The combustible briquette according to the present invention is easy to ignite and it burn relatively uniform and controlled and is therefore particularly suited for grilling human food.

### Figures

The invention will be described in the following with reference to the figures in which
- fig. 1: illustrates a cross section through the middle of a combustible briquette, as seen from the front,
- fig. 2: illustrates combustible briquettes in use in a grill, as seen from the front,
- fig. 3: illustrates a cross section through the middle of a combustible briquette comprising an additional layer, as seen from the front,
- fig. 4: illustrates a cross section through the middle of a combustible briquette comprising through holes, as seen from the front,
- fig. 5: illustrates a combustible briquette being formed by pressing, as seen from the front,
- fig. 6: illustrates a lump before being dipped into a bath of embedding material, as seen from the front,
- fig. 7: illustrates a lump being dipped into a bath of embedding material, as seen from the front, and
- fig. 8: illustrates a lump after being dipped into a bath of embedding material, as seen from the front.

### Detailed description

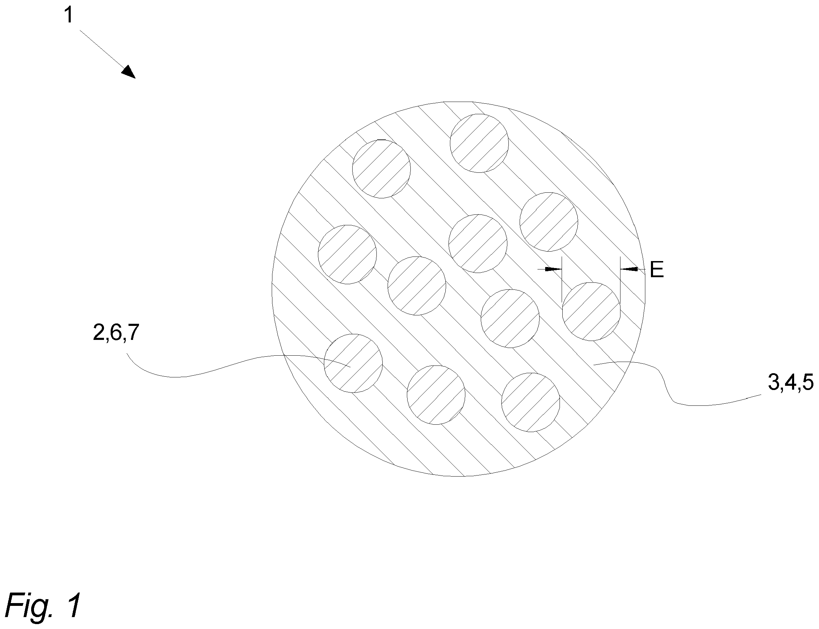

Fig. 1 illustrates a cross section through the middle of a combustible briquette 1, as seen from the front.

The lumps 2 are fully enclosed by an embedding material 3 which in this case is formed by a mixture of charcoal 4 and an ignition agent 5. However, the ignition agent 5 could be discrete portions mixed with the charcoal 4 so that the ignition agent 5 would be discrete pellets distributed in the embedding material 3.

The amount of ignition agent 5 constitutes 25% of the weight of the embedding material 3 but the ignition agent 5 could constitute 20%, 15%, 10% or even less of the weight of the embedding material 3 or the ignition agent 5 could constitute 30%, 35%, 40% or even more of the weight of the embedding material 3 e.g. depending on the type of ignition agent 5 and what it is mixed with.

The ignition agent 5 is an oxidising agent in the form of natrium nitrate but the ignition agent 5 could comprise another type of oxidising agent, a mixture of different oxidising agents or it could be bio product such as bio oil (e.g. palm oil), bio ethanol, paraffin wax or any combination thereof.

The embedding material 3 is made only by charcoal 4 and the ignition agent 5 but the embedding material 3 could comprise further material such as a binder, filler, wood, straw or other.

The embedding material 3 constitutes 25% of the total weight of the briquette 1 but the embedding material 3 could constitute 22%, 18%, 15% or even less of the weight of the briquette 1 or the embedding material 3 could constitute 30%, 35%, 40% or even more of the weight of the briquette 1 e.g. depending on the type and amount of ingredients in embedding material 3 and/or the lumps 2 and/or the particular use the briquette 1 is intended for.

Similarly the lumps 2 constitutes 75% of the total weight of the briquette 1 but the lumps 2 could constitute 70%, 60%, 50% or even less of the weight of the briquette 1 or the lumps 2 could constitute 80%, 83%, 86% or even more of the weight of the briquette 1 e.g. depending on the type and amount of ingredients in embedding material 3 and/or the lumps 2 and/or the particular use the briquette is intended for.

The lumps 2 is formed spherically and the extent of the lumps - which in this case the diameter of the lumps - is 4 mm. However the lumps could be bigger - such as 7 mm, 9 mm, 12 mm or even bigger. The lumps 2 could have another shape, such as the cylindrical (as standard wood pellets, a cubic shape, a more chaotic shape or other and/or at least some of the lumps 2 could be formed different from each other - i.e. with different maximum extent.

The also the outer shape of the briquette 1 is spherical with a substantially smooth outer surface. However, the surface of the briquette 1 could vary e.g. if it had dimples, if it was in the form of a mesh, if it had grooves or other. And the shape of the briquette 1 could be different, such as the traditional pillow shaped briquette, or it could have an oval shape, a rod shape, a donut shape, a polygonal shape or other.

The briquette 1 comprises lumps 2 made entirely from combustible material 7 in the form of compressed raw biomass which in this case is wood. However, also the lumps 2 could comprise an amount of ignition agent 5 but to reduce cost the lumps 2 would advantageously contain a lower percentage of ignition agent 5 than the embedding material 3.

The lumps 2 could also or instead comprise another combustible material 7 such as charcoal 4, compressed paper, vax or other.

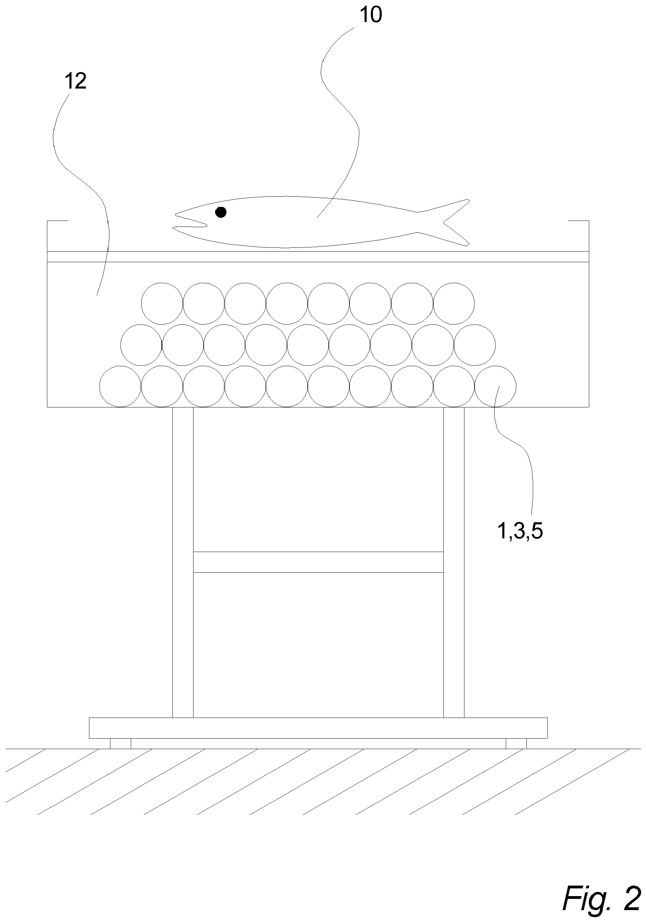

The briquette 1 weighs 30 grams but it could obviously be both smaller or bigger depending on material choice, use or other. Fig. 2 illustrates combustible briquettes 1 in use in a grill 12, as seen from the front. In this embodiment the combustible briquettes 1 is used for grilling human food 10 in a conventional grill 12. In this embodiment the briquettes 1 are initially placed in the grill 12 and then ignited by means of a fire source such as a match, a lighter or similar. Since the embedding material 3 comprises an ignition agent the briquettes may be lit directly without the use of additional lighter fluid, fuel tablets, kindling or other.

In this embodiment the ignition agent 5 is an oxidizing agent evenly distributed in the embedding material 3 so that when the embedding material 3 is ignited, it will start combusting without producing flames and due to the use of charcoal 4 in the embedding material 3 it will only give off very little smoke. Within a few minutes (typically five minutes) the combustion process will have spread to all the briquettes 1 and they will be combusting substantially all over the outer surface due to the oxidizing agent in the embedding material 3. And when the ignition agent 5 is an oxidizing agent - and depending on the amount and distribution of the oxidizing agent - the combustion process can also take place inside the briquette. Thus, the briquettes 1 according to the present invention will have reached a temperature sufficient to grill human food 10 very quickly - compared to conventional charcoal briquettes. And when properly ignited the briquette 1 will continue to burn uniformly all the way to the lumps 2 which will then have been heated and will be ignited seamlessly by the embedding material 3 as the embedding material 3 is fully combusted so that the lumps 2 will continue to burn in smooth continuation of the embedding material 3 or to burn out substantially simultaneously or before the embedding material 3.

In this embodiment the briquettes 1 are used as the fuel in a conventional grill 12 but in another embodiment the briquettes 1 could be used in pizza ovens, smoke ovens or other and/or the briquettes 1 could be used as kindling.

In this embodiment the briquettes 1 are used for grilling human food 10 in the form of a fish but it would be obvious to the skilled person that the briquettes 1 also could be used for heating water or other liquids, for baking, for pot cooking or other.

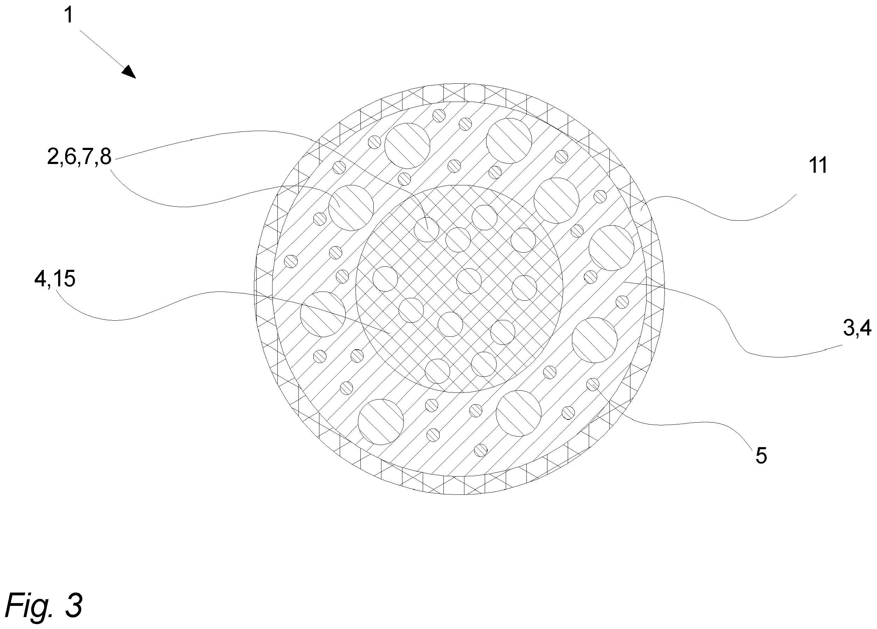

Fig. 3 illustrates a cross section through the middle of a combustible briquette 1 comprising an additional layer 11, as seen from the front.

In this embodiment the briquette 1 is enclosed by an additional layer 11 in the form of a thin layer of paraffin wax to make the briquette easier and less messy to handle. Furthermore, the additional layer 11 will in this case aid in igniting the briquette fast.

In another embodiment the briquette 1 could also or instead comprise other additional layers 11 e.g. in the form of an strengthening layer arranged to ensure that the briquette remains whole until use, an ignition signalling layer arranged to produce visible flames during the initial ignition so that proper ignition can be visually detected, a duration detection layer inside or around the lumps 2 or in or near the core of the briquette 1 arranged to e.g. briefly produce coloured smoke to indicate a specific combustion state of the briquette 1 (e.g. that the briquette is almost burned out), a colour layer giving the briquette 1 a distinct outer surface colour or other or any combination thereof.

In this embodiment the briquette 1 comprises a single core lump 15 made from a mixture of charcoal 4 and raw biomass 6 in the form of discrete items 8 of compressed dry but otherwise unprocessed wood - e.g. in the form of wood pellets.

However, in another embodiment the core lump 15 or other lumps 2 could also or instead comprise biomass 6 distributed evenly in the core lump 15 and/or lumps 2, they could comprise items of a charcoal and ignition agent 5 mixture - similar to the one forming the embedding material 3 - or an ignition agent 5 could be distributed substantially evenly in the core lump 15 and/or the lumps 2, the core lump 15 and/or the lumps 2 could comprise a filler or a binder or other or any combination thereof. Or the entire core lump 15 could be formed uniformly by a single material such as biomass 6.

In this embodiment lumps 2 are also distributed in the embedding material 3 surrounding the core lump 15 but the briquette 1 could only comprise a single lump 2 in the form of the core lump 15.

In this embodiment the ignition agent 5 is formed as discrete portions embedded in the charcoal to form the embedding material 3.

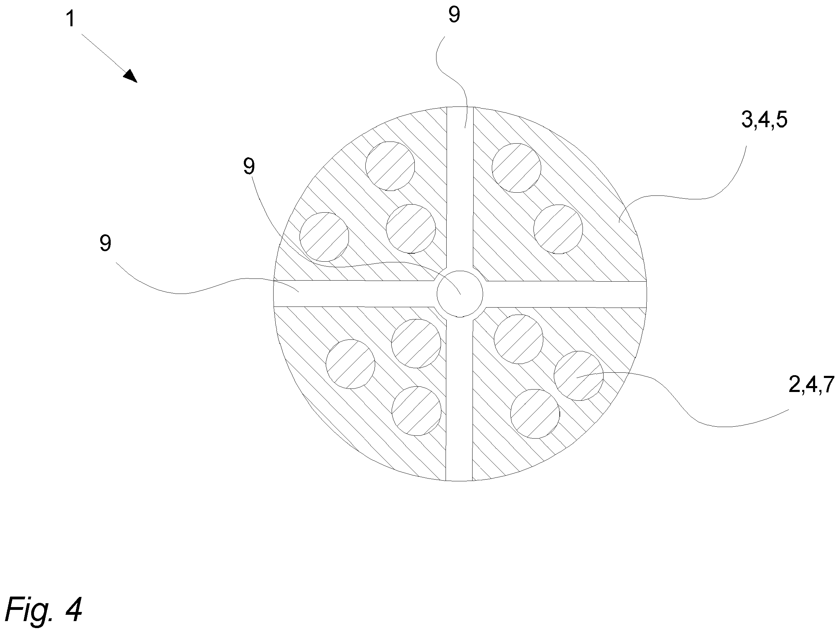

Fig. 4 illustrates a cross section through the middle of a combustible briquette 1 comprising through holes 9, as seen from the front.

In this embodiment the spherical briquette 1 is provided with three through holes 9 arranged perpendicular to each other so that no matter how the briquette 1 is orientated at least one of the through holes 9 will face upwards to ensure that a chimney effect can be established during combustion. Such through holes 9 will also aid in igniting the lumps 2 in that it increases the surface area of the briquette 1 to enable easier access to oxygen in the air to the lumps 2. However, in another embodiment the briquette 1 could comprise another number of through holes 9 - such as one, two, six, nine or even more - and/or the through holes 9 could be arranged differently such as parallel, chaotically or other.

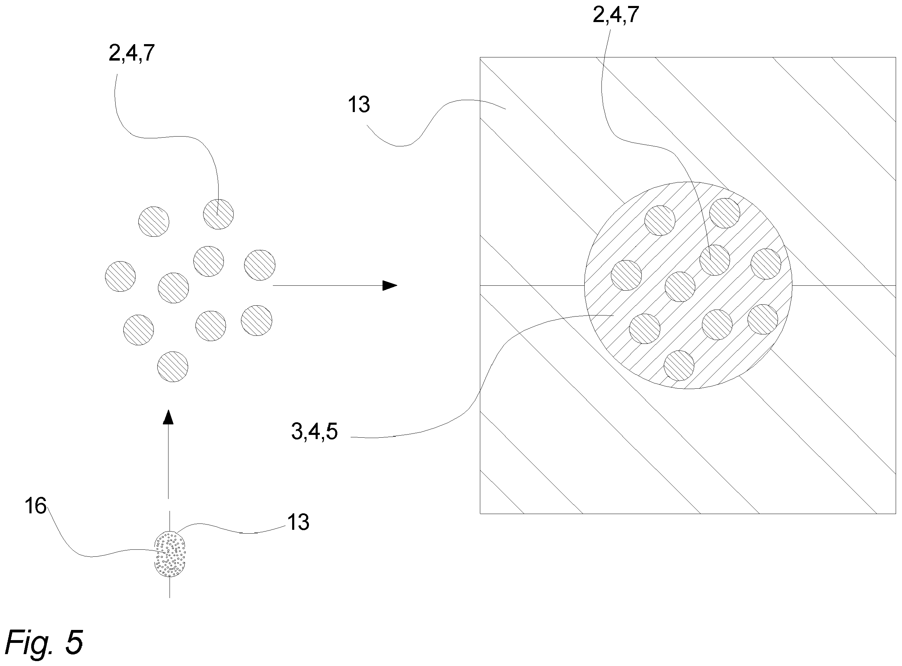

Fig. 5 illustrates a combustible briquette 1 being formed by pressing, as seen from the front.

The lumps 2 are first formed by joining subcomponents 16 - in this case in the form of wood shavings - by compressing the subcomponents 16 in some sort of press 13 at a first pressure to form a single cohesive lump 2. The subcomponents 16 could also or instead be straw material, wood chips, shell material or another type of biomass, it could be small pieces of charcoal or charcoal dust, or it could be dust and/or fragments of any other combustible material 7. A number of these lumps 2 could then be mixed into a liquid or semi-liquid solution of the embedding material 3 or embedding material 3 in a powder or granulate form and the mixture could then be dried in the desired shape. However, an amount of these lumps 2 - formed at a first pressure - is then surrounded by non-coherent embedding material 3 and pressed in a press 13 at a second pressure that is higher than the first pressure so that a single coherent briquette 1 is formed.

During or before the pressing process or another manufacturing process (such as a wet forming method) the loose materials could be joined and consolidated in a mould by pressure, temperature, vibrations or any combination thereof so as to make solid lumps 2 and solid briquettes 1 of constant size and density.

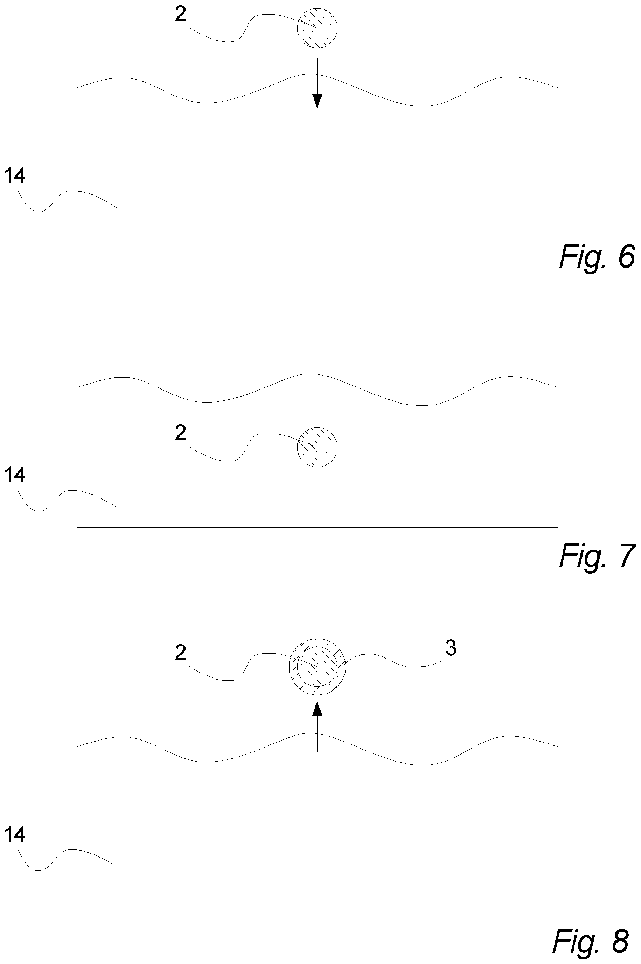

Fig. 6 illustrates a lump 2 before being dipped into a bath 14 of embedding material 3, as seen from the front, fig. 7 illustrates a lump 2 being dipped into a bath 14 of embedding material 3, as seen from the front, and fig. 8 illustrates a lump 2 after being dipped into a bath 14 of embedding material 3, as seen from the front.

In this embodiment the embedding material 3 is applied to the lumps 2 through a dipping process in which the lumps 2 is dipped into a bath 14 of liquid embedding material 3. Once the lumps 2 is pulled up again the lumps 2 is dipped again and this continues until the embedding material 3 has a sufficient thickness. This process will ensure strong adhesion between the lumps 2 and the embedding material 3 when these embedding-material-covered lumps 2 are embedded in further embedding material 3. Or the briquette could simply be formed by a single lump 2 in the form of a large core lump 15 being covered by embedding material 3 according to this process or another of the discussed processes.

However, it should be understood that a briquette 1 according to the present invention could be formed in numerous other ways.

The invention has been exemplified above with reference to specific examples of lumps 2, embedding materials 3, ignition agents 5 and other. However, it should be understood that the invention is not limited to the particular examples described above but may be designed and altered in a multitude of varieties within the scope of the invention as specified in the claims.

### List

- 1.: Combustible briquette
- 2.: Lump
- 3.: Embedding material
- 4.: Charcoal
- 5.: Ignition agent
- 6.: Raw biomass
- 7.: Combustible material
- 8.: Item
- 9.: Through hole
- 10.: Human food
- 11.: Outer layer
- 12.: Grill
- 13.: Press
- 14.: Bath of embedding material
- 15.: Core lump
- 16.: Subcomponent
- E.: Extent of lump

## Claims

1. A combustible briquette (1) comprising more than one lumps (2) primarily made of a combustible material (7) including compressed charcoal (4), wherein said more than one lumps (2) have an extent (E) of minimum 4 mm, wherein said more than one lumps (2) are embedded in an embedding material (3), wherein said embedding material (3) comprises charcoal (4) and an ignition agent (5) and wherein said ignition agent (5) constitutes between 8 and 45% of the weight of said embedding material (3).

2. A combustible briquette (1) according to claim 1, wherein said more than one lumps (2) have an extent (E) of minimum 5 mm, preferably minimum 7 mm and most preferred minimum 10 mm.

3. A combustible briquette (1) according to claim 1 or 2, wherein said more than one lumps (2) have an extent (E) of maximum 95%, preferably maximum 80% and most preferred maximum 60% of the maximum extent of the combustible briquette (1).

4. A combustible briquette (1) according to any of the preceding claims, wherein said more than one lumps (2) constitute at least 20%, preferably at least 40% and most preferred at least 60% of the total weight of said briquette (1).

5. A combustible briquette (1) according to any of the preceding claims, wherein said embedding material (3) is fully encapsulating said more than one lumps (2).

6. A combustible briquette (1) according to any of the preceding claims, wherein said embedding material (3) constitute at least 10%, preferably at least 20% and most preferred at least 25 % of the total weight of said briquette (1).

7. A combustible briquette (1) according to any of the preceding claims, wherein said more than one lumps (2) are formed spherically.

8. A method for manufacturing a combustible briquette (1), said method comprising the steps of:
• forming more than one lumps (2) having a minimum extent of at least 4 mm by compressing one or more subcomponents (16) primarily made of a combustible material (7) including charcoal (4), and
• embedding said more than one lumps (2) in an embedding material (3) comprising charcoal (4) and an ignition agent (5), wherein said ignition agent (5) constitutes between 8 and 45% of the weight of said embedding material (3).

9. A method according to claim 8, wherein said more than one lumps (2) are embedded in said embedding material (3) by being mixed into embedding material (3).

10. A method according to claim 8, wherein said combustible briquette (1) is formed by compressing said embedding material (3) containing said more than one lumps (2).

11. A method according to any of claims 8-10, wherein said more than one lumps (2) are each formed by compressing said subcomponents (16) at a first pressure and wherein said combustible briquette (1) is formed by pressing said embedding material (3) containing said more than one lumps (2) at a second pressure and wherein said second pressure is higher than said first pressure.

12. A method according to any of claims 8-11, wherein said method further comprises the step of encapsulating said embedding material (3) containing said more than one lumps (2) in an outer layer (11).

13. A method according to claim 12, wherein said outer layer (11) comprises an ignition agent (5).

14. A method according to claim 12 or 13, wherein said outer layer (11) is formed by the same material as said embedding material (3).

15. Use of a combustible briquette (1) according to any of claims 1-7 for grilling human food (10).

## Patentansprüche

1. Brennbares Brikett (1), umfassend mehr als einen Brocken (2), der hauptsächlich aus einem brennbaren Material (7) einschließlich komprimierter Holzkohle (4) gefertigt ist, wobei der mehr als eine Brocken (2) eine Erstreckung (E) von mindestens 4 mm aufweist, wobei der mehr als eine Brocken (2) in ein Einbettungsmaterial (3) eingebettet ist, wobei das Einbettungsmaterial (3) Holzkohle (4) und ein Zündmittel (5) umfasst und wobei das Zündmittel (5) zwischen 8 und 45 % des Gewichts des Einbettungsmaterials (3) darstellt.

2. Brennbares Brikett (1) nach Anspruch 1, wobei der mehr als eine Brocken (2) eine Erstreckung (E) von mindestens 5 mm, vorzugsweise mindestens 7 mm und am meisten bevorzugt mindestens 10 mm aufweist.

3. Brennbares Brikett (1) nach Anspruch 1 oder 2, wobei der mehr als eine Brocken (2) eine Erstreckung (E) von maximal 95 %, vorzugsweise maximal 80 % und am meisten bevorzugt maximal 60 % der maximalen Erstreckung des brennbaren Briketts (1) aufweist.

4. Brennbares Brikett (1) nach einem der vorherigen Ansprüche, wobei der mehr als eine Brocken (2) mindestens 20 %, vorzugsweise mindestens 40 % und am meisten bevorzugt mindestens 60 % des Gesamtgewichts des Briketts (1) darstellt.

5. Brennbares Brikett (1) nach einem der vorherigen Ansprüche, wobei das Einbettungsmaterial (3) den mehr als einen Brocken (2) vollständig einkapselt.

6. Brennbares Brikett (1) nach einem der vorherigen Ansprüche, wobei das Einbettungsmaterial (3) mindestens 10 %, vorzugsweise mindestens 20 % und am meisten bevorzugt mindestens 25 % des Gesamtgewichts des Briketts (1) darstellt.

7. Brennbares Brikett (1) nach einem der vorherigen Ansprüche, wobei der mehr als eine Brocken (2) kugelförmig gebildet ist.

8. Verfahren zum Herstellen eines brennbaren Briketts (1), das Verfahren umfassend die folgenden Schritte:
• Bilden von mehr als einem Brocken (2), der eine minimale Erstreckung von mindestens 4 mm aufweist, durch Komprimieren einer oder mehrerer Teilkomponenten (16), die hauptsächlich aus einem brennbaren Material (7) einschließlich Holzkohle (4) gefertigt sind, und
• Einbetten den mehr als einen Brocken (2) in ein Einbettungsmaterial (3), umfassend Holzkohle (4) und ein Zündmittel (5), wobei das Zündmittel (5) zwischen 8 und 45 % des Gewichts des Einbettungsmaterials (3) darstellt.

9. Verfahren nach Anspruch 8, wobei der mehr als eine Brocken (2) in das Einbettungsmaterial (3) eingebettet werden, indem es in das Einbettungsmaterial (3) gemischt wird.

10. Verfahren nach Anspruch 8, wobei das brennbare Brikett (1) durch Komprimieren des Einbettungsmaterials (3) gebildet wird, das den mehr als einen Brocken (2) enthält.

11. Verfahren nach einem der Ansprüche 8-10, wobei der mehr als eine Brocken (2) jeweils durch Komprimieren der Teilkomponenten (16) bei einem ersten Druck gebildet werden und wobei das brennbare Brikett (1) durch Pressen des Einbettungsmaterials (3), das den mehr als einen Brocken (2) enthält, bei einem zweiten Druck gebildet wird und wobei der zweite Druck höher ist als der erste Druck.

12. Verfahren nach einem der Ansprüche 8-11, wobei das Verfahren ferner den Schritt eines Einkapselns des Einbettungsmaterials (3), das den mehr als einen Brocken (2) enthält, in einer äußeren Schicht (11) umfasst.

13. Verfahren nach Anspruch 12, wobei die äußere Schicht (11) ein Zündmittel (5) umfasst.

14. Verfahren nach Anspruch 12 oder 13, wobei die äußere Schicht (11) aus demselben Material wie das Einbettungsmaterial (3) gebildet wird.

15. Verwendung eines brennbaren Briketts (1) nach einem der Ansprüche 1-7 zum Grillen von menschlichen Lebensmitteln (10).

## Revendications

1. Briquette combustible (1) comprenant plus qu'un blocs (2) constitués principalement d'un matériau combustible (7) incluant du charbon de bois compressé (4), dans laquelle lesdits plus qu'un blocs (2) ont une étendue (E) de minimum 4 mm, dans laquelle lesdits plus qu'un blocs (2) sont enrobés dans un matériau d'enrobage (3), dans laquelle ledit matériau d'enrobage (3) comprend du charbon de bois (4) et un agent d'allumage (5) et dans laquelle ledit agent d'allumage (5) constitue entre 8 et 45 % du poids dudit matériau d'enrobage (3).

2. Briquette combustible (1) selon la revendication 1, dans laquelle lesdits plus qu'un blocs (2) ont une étendue (E) de minimum 5 mm, de préférence de minimum 7 mm et plus préférablement de minimum 10 mm.

3. Briquette combustible (1) selon la revendication 1 ou 2, dans laquelle lesdits plus qu'un blocs (2) ont une étendue (E) de maximum 95 %, de préférence de maximum 80 % et le plus préférablement de maximum 60 % de l'étendue maximum de la briquette combustible (1).

4. Briquette combustible (1) selon l'une quelconque des revendications précédentes, dans laquelle lesdits plus qu'un blocs (2) constituent au moins 20 %, de préférence au moins 40 % et plus préférablement au moins 60 % du poids total de ladite briquette (1).

5. Briquette combustible (1) selon l'une quelconque des revendications précédentes, dans laquelle ledit matériau d'enrobage (3) encapsule entièrement lesdits plus qu'un blocs (2).

6. Briquette combustible (1) selon l'une quelconque des revendications précédentes, dans laquelle ledit matériau d'enrobage (3) constitue au moins 10 %, de préférence au moins 20 % et plus préférablement au moins 25 % du poids total de ladite briquette (1).

7. Briquette combustible (1) selon l'une quelconque des revendications précédentes, dans laquelle lesdits plus qu'un blocs (2) sont formés de manière sphérique.

8. Procédé de fabrication d'une briquette combustible (1), ledit procédé comprenant les étapes de :
• formation de plus qu'un blocs (2) ayant une étendue minimum d'au moins 4 mm en compressant un ou plusieurs sous-composants (16) constitués principalement d'un matériau combustible (7) incluant du charbon de bois (4), et
• enrobage desdits plus qu'un blocs (2) dans un matériau d'enrobage (3) comprenant du charbon de bois (4) et un agent d'allumage (5), dans lequel ledit agent d'allumage (5) constitue entre 8 et 45 % du poids dudit matériau d'enrobage (3).

9. Procédé selon la revendication 8, dans lequel lesdits plus qu'un blocs (2) sont enrobés dans ledit matériau d'enrobage (3) en étant mélangés dans le matériau d'enrobage (3).

10. Procédé selon la revendication 8, dans lequel ladite briquette combustible (1) est formée en compressant ledit matériau d'enrobage (3) contenant lesdits plus qu'un blocs (2).

11. Procédé selon l'une quelconque des revendications 8 à 10, dans lequel lesdits plus qu'un blocs (2) sont chacun formés en compressant lesdits sous-composants (16) à une première pression et dans lequel ladite briquette combustible (1) est formée en pressant ledit matériau d'enrobage (3) contenant lesdits plus qu'un blocs (2) à une seconde pression et dans lequel ladite seconde pression est supérieure à ladite première pression.

12. Procédé selon l'une quelconque des revendications 8 à 11, dans lequel ledit procédé comprend en outre l'étape d'encapsulation dudit matériau d'enrobage (3) contenant lesdits plus qu'un blocs (2) dans une couche extérieure (11).

13. Procédé selon la revendication 12, dans lequel ladite couche extérieure (11) comprend un agent d'allumage (5).

14. Procédé selon la revendication 12 ou 13, dans lequel ladite couche extérieure (11) est formée du même matériau que ledit matériau d'enrobage (3).

15. Utilisation d'une briquette combustible (1) selon l'une quelconque des revendications 1 à 7 pour griller de l'alimentation humaine (10).
